# FASCICULE DE BREVET EUROPEEN

(11) **EP 3 823 764 B1**
(45) Date de publication et mention de la délivrance du brevet: **17.08.2022**
(21) Numéro de dépôt: 19739993.4
(22) Date de dépôt: 15.07.2019
(51) Int. Cl.: B05B 11/00, B65D 1/06, B65D 83/38, B65D 83/42

(54) **BOÎTIER POUR RÉCIPIENT SOUS PRESSION**
GEHÄUSE FÜR EINEN DRUCKBEHÄLTER
HOUSING FOR A PRESSURISED CONTAINER

(30) Priorité: 18.07.2018 FR 1856672
(43) Date de publication de la demande: 26.05.2021
(73) Titulaire: Lindal France SAS, 54150 Val de Briey (FR)
(72) Inventeur: BODET, Hervé, 55100 VERDUN (FR); GAILLARD, Eric, 55320 DIEUE SUR MEUSE (FR)
(74) Mandataire: Vièl, Frédérique
(86) Numéro de dépôt international: PCT/EP2019/069053
(87) Numéro de publication internationale: WO 2020/016199

(56) Documents cités:
- EP-A1- 2 998 241
- FR-A1- 2 789 662
- FR-B1- 2 789 662
- GB-A- 1 311 940
- JP-A- H03 162 273
- US-A- 3 131 828
- US-A- 3 356 257
- US-A- 3 422 837
- US-A- 4 685 597

## Description

L'invention concerne un boîtier pour un récipient sous pression tel qu'un générateur d'aérosol ou un distributeur de produits pâteux.

Des boîtiers pour récipients sous pression sont connus, par exemple de US 3356257 A.

L'invention a pour objectif de réaliser un boîtier, notamment en matière plastique, qui puisse être mis sous pression par une autre voie que la valve.

Conformément à l'invention, le boîtier selon la revendication 1 se compose notamment d'un fond comprenant une ouverture destinée à être fermée directement ou indirectement par un bouchon, des moyens d'étanchéité pour assurer l'étanchéité entre le bouchon et le boîtier lorsque le boîtier est muni d'un bouchon, et de moyens de retenue pour retenir, lorsque le récipient est sous pression, un bouchon fermant directement ou indirectement ladite ouverture. Les moyens de retenue sont distincts du bouchon et se présentent sous une forme initiale inactive et doivent, pour remplir leur fonction, être activés après que l'ouverture a été fermée directement ou indirectement par un bouchon. Bien que les moyens d'étanchéité et les moyens de retenue puissent être confondus, ils sont de préférence distincts.

Les moyens de retenue sont de préférence placés sur la face du fond située à l'extérieur du boîtier, et ce aussi bien avant qu'après leur activation.

Dans une variante privilégiée de l'invention, l'ouverture comprend un trou de préférence entouré d'un canal s'étendant vers l'intérieur et/ou vers l'extérieur du boîtier.

L'étanchéité entre le bouchon et le boîtier peut être réalisée par un montage serré du bouchon dans l'ouverture, en particulier dans le trou et/ou dans le canal. Il est également possible, à la place et/ou en plus du montage serré, de réaliser les moyens d'étanchéité sous la forme d'une nervure d'étanchéité placée dans le canal, notamment à l'extrémité du canal située le plus vers l'intérieur du boîtier, ou au niveau du trou.

Les moyens de retenue peuvent être constitués par une zone de déformation placée dans le prolongement de l'ouverture, du côté de la face du fond dirigée vers l'extérieur du boîtier. La zone de déformation est conçue pour être déformée, après introduction d'un bouchon dans l'ouverture, pour former une surface de butée pour le bouchon en vue d'empêcher ce dernier de se déplacer vers l'extérieur du boîtier. Une autre solution consiste à réaliser les moyens de retenue sous la forme d'une rondelle destinée à être fixée au boîtier, de préférence soudée, dans le prolongement de l'ouverture du côté de la face du fond dirigée vers l'extérieur du boîtier après introduction d'un bouchon dans l'ouverture. La rondelle est conçue pour former après fixation au boîtier une surface de butée pour le bouchon en vue d'empêcher ce dernier de se déplacer vers l'extérieur du boîtier. Dans le cas de la rondelle, les moyens de retenue constituent une pièce séparée avant leur fixation sur le fond du boîtier. La déformation de la zone de déformation ou la fixation de la rondelle au boîtier constitue l'activation des moyens de retenue.

En général, l'ouverture est munie d'un bouchon et c'est l'ensemble boîtier/bouchon qui est utilisé pour la fabrication d'un récipient sous pression. La zone de déformation est de préférence déformée directement après introduction du bouchon en formant une surface de butée pour ce dernier. Quand le bouchon est introduit directement dans le trou, l'ouverture est fermée directement par le bouchon.

Dans une autre variante de réalisation, l'ouverture comprend un trou et le boîtier comprend une unité préassemblée séparée du boîtier, et destinée à être introduite dans le trou et à être fixée au boîtier, de préférence soudée. L'unité préassemblée est constituée d'un canal muni des moyens d'étanchéité et des moyens de retenue, et d'un bouchon introduit dans le canal et coopérant avec les moyens d'étanchéité et les moyens de retenue. Les moyens de retenue peuvent comprendre une surface de fixation pour fixer l'unité préassemblée au boîtier. L'activation des moyens de retenue est réalisée par la fixation de l'unité préassemblée au boîtier. Dans cette variante de réalisation, l'ouverture est fermée indirectement par le bouchon en raison de l'interposition du canal. L'unité préassemblée constitue initialement une pièce séparée avant sa fixation au boîtier. Elle peut être mise en place lors de la fabrication du boîtier, ou après remplissage du récipient avant sa mise sous pression. Dans ce dernier cas, le conditionneur reçoit d'une part un boîtier muni d'une ouverture, et d'autre part une unité préassemblée prête à être introduite dans l'ouverture pour y être fixée. Les moyens d'étanchéité peuvent être constitués par une nervure d'étanchéité placée dans le canal de l'unité préassemblée, notamment à l'extrémité du canal située le plus vers l'intérieur du boîtier. Les moyens de retenue peuvent être constitués par une surface de butée empêchant le bouchon de se déplacer vers l'extérieur du boîtier quand l'unité préassemblée est fixée au boîtier. Une autre solution consiste à concevoir les moyens de retenue sous la forme d'une rondelle fixée au boîtier, de préférence soudée, dans le prolongement du canal, du côté de la face du fond dirigée vers l'extérieur du boîtier, la rondelle étant conçue pour former après fixation une surface de butée pour le bouchon en vue d'empêcher ce dernier de se déplacer vers l'extérieur du boîtier quand l'unité préassemblée est fixée au boîtier.

Le bouchon peut être réalisé dans une matière élastomère, de préférence du nitrile. Dans ce cas, le remplissage se fait par exemple à l'aide d'une aiguille traversant le bouchon. Plutôt qu'un bouchon élastomère, on peut également utiliser un bouchon de type antiretour. Il n'est alors plus nécessaire d'utiliser une aiguille pour la mise sous pression.

Le boîtier peut être constitué par une pièce en matière plastique, de préférence en thermoplastique, notamment en PET, PEN ou nylon, ou un mélange de ces matières. Le boîtier est obtenu par exemple par soufflage, notamment par injection-soufflage.

L'ouverture et les moyens de retenue peuvent être disposés en un point décentré du fond, des moyens d'indexage pouvant alors être prévus pour faciliter l'orientation du boîtier lors de la fermeture de l'ouverture par un bouchon.

Le fond du boîtier peut présenter dans sa partie centrale la forme d'un dôme incurvé de préférence vers l'intérieur du boîtier. L'ouverture et les moyens de retenue peuvent être placés dans un retrait réalisé dans le fond, notamment dans le dôme du fond. Le fond peut également être plan, de forme pétaloïde (comme certaines bouteilles d'eau présentant plusieurs lobes formant des pieds pour le fond) ou être incurvé vers l'extérieur en étant muni d'un piédestal, de préférence rapporté.

La forme générale du boîtier peut être très variée. Il peut être sensiblement sphérique. Généralement, il aura plutôt une forme tubulaire dont la première extrémité est fermée par le fond muni de l'ouverture et dont la deuxième extrémité est destinée à recevoir des moyens de prélèvement, tels qu'une valve. La section transversale de la paroi tubulaire peut être circulaire en formant par exemple un simple cylindre de révolution. Elle peut aussi être ovale ou présenter des formes plus complexes (par exemple en étoile). Il n'est pas nécessaire que la partie centrale du boîtier soit cylindrique. La paroi tubulaire peut présenter des bombements ou des enfoncements pour rendre le boîtier plus esthétique ou plus commode à tenir.

L'invention concerne également un procédé selon la revendication 16 pour fabriquer un boîtier selon l'invention. Ce procédé se caractérise par les étapes suivantes :
a) Réalisation d'un fond muni d'une ouverture destinée à être fermée directement ou indirectement par un bouchon ;
b) Réalisation de moyens d'étanchéité pour assurer l'étanchéité entre le bouchon et le boîtier lorsque le boîtier est muni d'un bouchon ; et
c) Réalisation de moyens de retenue pour retenir, lorsque le récipient est sous pression, un bouchon fermant l'ouverture.
Les moyens de retenue, qui se présentent sous une forme initiale inactive, sont conçus pour être activés après fermeture directe ou indirecte de l'ouverture par un bouchon.

Le boîtier est réalisé de préférence par soufflage.

Lors de l'étape a), un trou peut être réalisé dans le fond, et lors de l'étape a) ou d'une étape ultérieure, un canal peut être placé autour du trou, lequel canal s'étend vers l'intérieur et/ou vers l'extérieur du boîtier. Le fond et le trou peuvent être réalisés dans une même étape ou dans deux étapes successives et/ou le trou peut être réalisé lors de de la mise en place du canal.

Dans un premier mode de réalisation du procédé, il est préférable de placer le bouchon et de le bloquer directement après la fabrication du boîtier pour former une unité qui est ensuite utilisée pour la fabrication des récipients sous pression. Il est également possible de placer le bouchon et de déformer la zone de déformation sur la ligne de remplissage, avant la mise sous pression. Pour cela, les étapes supplémentaires suivantes sont prévues
d) introduction d'un bouchon dans le boîtier pour fermer directement ou indirectement l'ouverture ;
e) puis activation des moyens de retenue pour former une surface de butée empêchant le bouchon de sortir du boîtier lorsqu'une pression est exercée à l'intérieur du boîtier, l'activation pouvant consister en la déformation d'une zone de déformation ou en la fixation, de préférence la soudure, d'une rondelle.

Une autre solution consiste à introduire dans le trou du fond une unité préassemblée puis à la fixer au boîtier, de préférence par soudage, notamment par friction circulaire (spin welding), de sorte que l'unité préassemblée avec le bouchon placé dedans ferme le trou. L'unité préassemblée est constituée d'un canal muni de moyens d'étanchéité et d'une surface de butée, et d'un bouchon introduit dans le canal et coopérant avec les moyens d'étanchéité.

L'invention est expliquée ci-dessous à l'aide de deux exemples de réalisation. Les figures montrent :
- Figure 1 :: vue en coupe verticale d'un boîtier selon un premier exemple de réalisation de l'invention ;
- Figure 2 :: vue en coupe du boîtier de la figure 1 au niveau de l'ouverture ;
- Figure 3 :: la même vue que la figure 2, un bouchon étant introduit dans l'ouverture ;
- Figure 4 :: la même vue que la figure 3, les moyens de déformation étant déformés ;
- Figure 5 :: vue en perspective du fond du boîtier ;
- Figure 6 :: une vue en coupe d'un boîtier selon un deuxième exemple de réalisation de l'invention.

Le boîtier (1) de l'invention est destiné à être fermé par une valve et à être mis sous pression par introduction d'un gaz propulseur après remplissage en vue de former un récipient sous pression tel qu'un générateur d'aérosol ou un distributeur de produits pâteux.

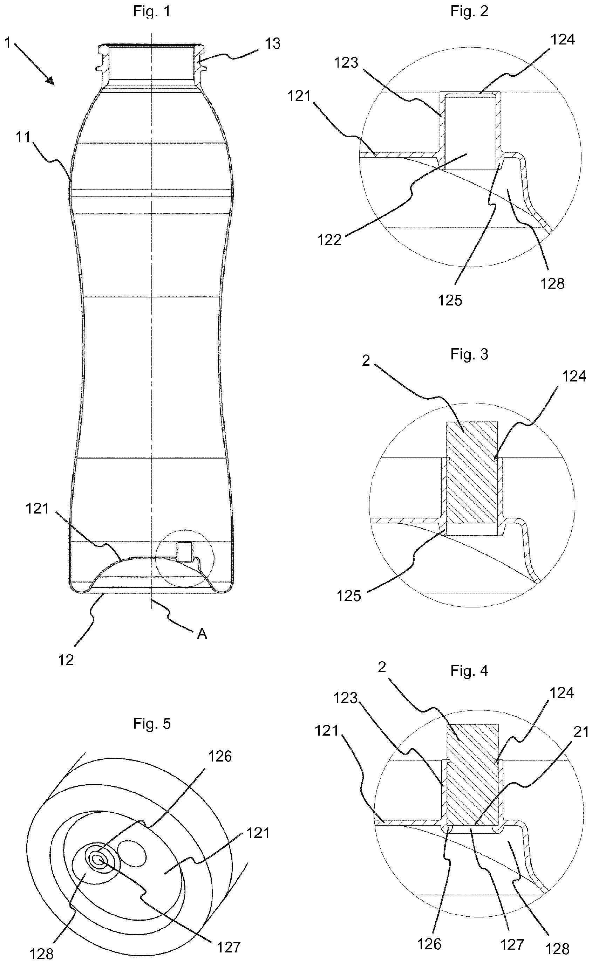

Pour des raisons de clarté de la description, il est fait appel à des références spatiales telles qu' « inférieur » et « supérieur ». Ces références se rapportent au boîtier lorsqu'il est dans la position représentée à la figure 1. Il va de soi que le boîtier peut être utilisé dans d'autres positions.

Comme le montre la figure 1, le boîtier (1) est constitué d'une paroi tubulaire (11), d'un fond (12) fermant la paroi tubulaire dans sa partie inférieure, et d'un col (13) placé dans le prolongement de la partie supérieure de la paroi tubulaire. Le boîtier présente, à quelques exceptions près, une symétrie de rotation autour d'un axe central (A). Il pourrait également ne pas être circulaire, et notamment avoir une section transversale ovale ou en étoile. Dans le cas du présent exemple de réalisation, la génératrice de la paroi tubulaire est une courbe de sorte que la paroi tubulaire n'est pas tout à fait cylindrique. La paroi tubulaire peut avoir toute forme adaptée aux besoins propres à l'utilisation envisagée. Elle pourrait être simplement cylindrique. Elle pourrait également être ellipsoïdale ou conique. Elle pourrait avoir une forme plus complexe présentant des bombements et/ou des enfoncements. Il présente cependant pratiquement à chaque fois une certaine symétrie autour d'un axe le traversant du fond (12) jusqu'au col (13).

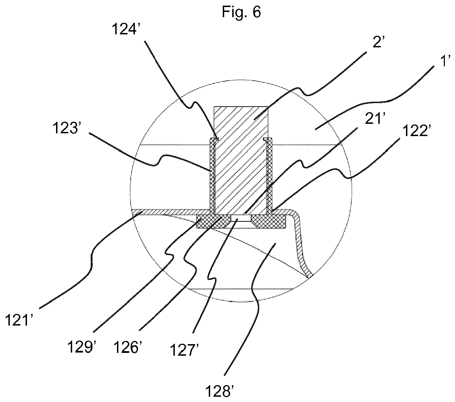

Le fond (12) peut avoir dans sa partie centrale la forme d'un dôme (121) bombé vers l'intérieur du boîtier comme dans le présent exemple. Un trou (122) est réalisé dans le fond, par exemple dans ce dôme. Ce trou est destiné à être fermé directement (Fig. 4) ou indirectement (Fig. 6) par un bouchon (2) en élastomère (plug) qui servira, après remplissage, à la mise sous pression du récipient par introduction d'un gaz propulseur, par exemple au moyen d'une aiguille traversant le bouchon. Ce bouchon, quand il est placé dans le boîtier, présente une face frontale (21) accessible de l'extérieur du boîtier. Plutôt qu'un bouchon en élastomère, on pourrait prévoir un bouchon de type antiretour qui permette la mise sous pression sans utiliser d'aiguille.

Le trou (122) peut être réalisé directement lors de la formation du boîtier, ou bien être réalisé plus tard. Il peut être entouré d'un canal (123) qui s'étend vers l'intérieur et/ou vers l'extérieur du boîtier. Ce canal (123) est de préférence de même section transversale intérieure que le trou. Le diamètre du canal est choisi de telle sorte que le bouchon (2) peut y être facilement introduit. Ce canal peut être réalisé par introduction dans le trou d'un tube qui est ensuite fixé, de préférence par soudage, notamment par ultrason ou par soudage par friction circulaire (spin welding), aménageant ainsi le canal intérieur (et la zone de déformation qui sera évoquée plus bas). Le trou (122) et le canal (123), quand il est présent, forment une ouverture.

Des moyens d'étanchéité sont prévus dans le canal ou au niveau du trou pour assurer l'étanchéité entre le bouchon et le boîtier. Dans une version simple, les moyens d'étanchéité sont constitués par le trou et/ou le canal eux-mêmes dont les dimensions sont choisies de telle sorte que le bouchon y est reçu serré. Cette solution peut être remplacée ou complétée par une nervure d'étanchéité (124) placée par exemple à l'extrémité du canal située le plus vers l'intérieur du boîtier. Cette nervure d'étanchéité (124) est d'un diamètre sensiblement plus petit que le diamètre du bouchon (2) de sorte que, même après mise sous pression, l'étanchéité soit assurée au moins au niveau de cette nervure. Le diamètre de la nervure est choisi certes sensiblement plus petit que celui du bouchon, mais pas trop petit non plus pour permettre l'introduction facile de celui-ci.

Du côté extérieur du boîtier, on a prévu une zone de déformation (125) placée soit directement adjacente au trou (122), soit à la suite du canal, si celui-ci s'étend vers l'extérieur du boîtier. La section transversale de cette zone de déformation (125) est de préférence identique à celle du trou (122) et/ou du canal (123). Elle peut également être choisie plus grande de telle sorte qu'elle n'empiète pas sur le trou (122) et/ou sur le canal (123). Cette zone de déformation sert, après déformation, à maintenir en place le bouchon (2). En effet, l'effet de retenue obtenu au niveau de la nervure d'étanchéité (124) permet dans des conditions normales avant mise sous pression de maintenir le bouchon (2) en place sans qu'il risque de se déplacer, notamment lors de l'introduction de l'aiguille de remplissage. Par contre, après mise sous pression, il peut régner à l'intérieur du récipient une pression pouvant dépasser 10 bars. La friction exercée par la nervure d'étanchéité (124) sur le bouchon ne serait pas suffisante pour empêcher ce dernier d'être expulsé du trou ou du canal. Après que le bouchon a été introduit dans le trou et/ou dans le canal, cette zone de déformation est déformée pour recouvrir le bord périphérique de la face frontale (21) du bouchon et former ainsi une surface de butée contre laquelle vient s'appuyer le bouchon lorsque le générateur d'aérosol est sous pression. Dans cette position, le bouchon est toujours en contact avec les moyens d'étanchéité, lorsqu'il y en a. La déformation peut être obtenue par exemple par déformation à chaud ou par tout autre moyen approprié. La zone déformée (126) forme un anneau ouvert en son centre (127), laissant le centre de la face frontale (21) du bouchon accessible aux moyens de mise sous pression, tels qu'une aiguille. La zone de déformation et la surface de butée qui résulte de sa déformation sont conçues de sorte à être perpendiculaires à l'axe du canal (123) et/ou parallèles au trou (122).

Une autre solution consiste non pas à prévoir une zone de déformation qui est déformée après introduction du bouchon, mais à surmouler la butée sur le trou ou sur la partie du canal saillant hors du boîtier après introduction du bouchon.

Dans l'exemple illustré ici, le boîtier présente une symétrie axiale autour de l'axe vertical (A). L'ouverture, formée par le trou (122) et le canal (123), est réalisée de façon décentrée par rapport à cet axe afin de laisser libre le centre du dôme pour l'injection, lequel centre du dôme coïncide avec l'axe de symétrie (A). S'il n'y a pas de contrainte imposant un point d'injection au centre du dôme, il est bien sûr possible de placer le trou (122) et le canal (123) dans l'alignement de l'axe de symétrie (A).

Le canal de l'exemple de réalisation présenté ici s'étend uniquement vers l'intérieur du boîtier et parallèlement à l'axe de symétrie (A). Seule la partie de déformation dépasse du dôme vers l'extérieur du boîtier. Le trou (122) et la partie de déformation (125) sont placés dans un retrait (128) formé dans le dôme (121). La paroi du retrait au niveau de l'ouverture (122, 123) est perpendiculaire à l'axe de symétrie (A). En plaçant le canal parallèlement à l'axe de symétrie (A) du boîtier, on facilite la mise en place du bouchon (2) durant l'assemblage et la mise sous pression, notamment lorsque cette mise sous pression est réalisée par introduction d'une aiguille à travers le plug. Il serait cependant également envisageable que l'axe du canal soit par exemple perpendiculaire à la tangente au dôme au niveau du trou (122).

Le boîtier muni de son bouchon selon le premier exemple de réalisation peut être fabriqué de la façon suivante :
A Fabrication du boîtier :
   a) fabrication du boîtier, par exemple par soufflage, avec réalisation du fond (12), de la paroi tubulaire (11) et du col (13), une ouverture constituée d'au moins un trou (122) étant réalisée dans le fond, soit directement, soit lors d'une sous-étape ultérieure. L'ouverture peut être complétée par le canal (123) ;
   b) réalisation de moyens d'étanchéité (124) placés dans le trou (122) ou le canal (123) s'il y en a un, ces moyens d'étanchéité assurant l'étanchéité entre le bouchon (2) et le boîtier (1) après que le bouchon a été introduit ; et
   c) réalisation du côté de la face du fond (12) dirigée vers l'extérieur du boîtier (1) d'une zone de déformation (125) placée dans le prolongement soit du trou (122) soit du canal (123) s'il y en a un qui saille hors du boîtier. La zone de déformation est conçue pour être déformée après introduction d'un bouchon dans l'ouverture pour former une surface de butée (126) pour le bouchon en vue d'empêcher ce dernier de se déplacer vers l'extérieur du boîtier. Cette zone de déformation constitue les moyens de retenue quand ils sont dans leur forme initiale inactive.
B Mise en place et blocage du bouchon, soit directement lors de la fabrication du boîtier, soit ultérieurement, notamment lors du remplissage du boîtier en vue de former un flacon sous pression :
   d) introduction du bouchon dans le trou (122) et/ou le canal (123) pour fermer l'ouverture ;
   e) puis activation des moyens de retenue par déformation de la zone de déformation en bloquant le bouchon de sorte qu'il ne puisse pas ressortir après mise sous pression du flacon.

Pour faciliter l'étape d'introduction du bouchon lorsque l'ouverture n'est pas centrée sur l'axe (A), il est possible de prévoir des moyens d'indexage permettant d'orienter correctement le boîtier afin que le trou et le canal soient dans l'alignement de l'outil de mise en place du bouchon. Le retrait (128) peut remplir cette fonction. Il est cependant également possible de prévoir dans le fond (12) un retrait ou une saillie spécifique, non représenté dans les figures.

Dans une variante de réalisation non représentée, la déformation de la zone de déformation (125) est remplacée par la fixation au boîtier, notamment par soudage, d'une rondelle dont le diamètre extérieur est supérieur au diamètre de l'ouverture (trou et/ou canal) et dont le diamètre intérieur est inférieur au diamètre du bouchon. Le bord périphérique de la rondelle est fixé au boîtier autour de l'ouverture. Le bord intérieur de la rondelle constitue les moyens de retenue.

Dans le deuxième exemple de réalisation présenté à la figure 6, l'ouverture est constituée d'un trou (122') dans lequel est insérée une unité préassemblée qui est ensuite fixée au boîtier (1'). L'unité préassemblée est constituée d'un canal (123') muni d'un bouchon (2'). Le canal est muni de moyens d'étanchéité (124'), d'une zone de déformation déformée pour former la surface de butée (126') et d'une surface de fixation (129') annulaire plus large que le canal (123') et l'ouverture (122'). L'unité préassemblée est fixée au boîtier de préférence par soudage, notamment par spin welding. La butée (126') peut également être formée en même temps que le canal (123'), avant même l'introduction du bouchon. Notamment, l'ensemble constitué du canal (123'), de la surface de butée (126') et de la surface de fixation (129') peut être réalisé d'un seul tenant par moulage ou par fixation sur une extrémité d'un canal (123') d'une rondelle (126', 129') dont le diamètre extérieur est plus grand que celui de l'ouverture (122') et du canal (123') et dont le diamètre intérieur est plus petit que le diamètre du bouchon. Comme le montre la figure 6, le bouchon (2') se trouve dans l'ouverture (122'). Cependant, on pourrait imaginer des unités préassemblées avec lesquelles, à l'état fixé de l'unité préassemblée, seul le canal (123') est dans l'ouverture, le bouchon étant décalé dans le canal pour être au-dessus ou en-dessous de l'ouverture (122').

Le procédé de fabrication de cette variante de boîtier peut être le suivant :
A' Fabrication du boîtier :
   a') fabrication du boîtier, par exemple par soufflage, avec réalisation du fond (12), de la paroi tubulaire (11) et du col (13), un trou (122') étant réalisé dans le fond, soit directement, soit lors d'une sous-étape ultérieure ;
B' Fabrication de l'unité préassemblée :
   b') réalisation de moyens d'étanchéité (124') dans le canal (123'), ces moyens d'étanchéité assurant l'étanchéité entre le bouchon (2') et le boîtier (1') après que l'unité préassemblée a été fixée au boîtier et le bouchon introduit dans le canal ; et
   c') réalisation des moyens de retenue placés dans le prolongement du canal (123'). Ils forment une surface de butée (126') pour le bouchon en vue d'empêcher ce dernier de se déplacer vers l'extérieur du boîtier. Les moyens de retenue (126') peuvent être obtenus par déformation d'une zone de déformation comme dans le cas du premier exemple de réalisation, cette déformation (qui n'est pas l'activation à proprement parler) pouvant être réalisée après introduction du bouchon dans le canal. Les moyens de retenue peuvent également être directement formés en même temps que le canal (123'), sans qu'il soit nécessaire que le bouchon soit déjà introduit dans le canal.
   d1') introduction du bouchon (2') dans le canal (123') de sorte qu'il coopère au moins avec les moyens d'étanchéité. S'il ne coopère pas encore avec les moyens de retenue, le bouchon sera déplacé jusqu'à la butée (126') au plus tard lors de la mise sous pression du récipient.
C' Insertion et fixation de l'unité préassemblée dans le trou
   d2') Insertion de l'unité préassemblée dans le trou (122'). L'ouverture est ainsi fermée indirectement par le bouchon contenu dans l'unité préassemblée.
   e') Fixation de l'unité préassemblée sur le boîtier, par exemple par soudage, de préférence par spin welding. Cette étape peut être réalisée avant remplissage du flacon, ou après remplissage. Le soudage de l'unité préassemblée sur le boîtier active les moyens de retenue (surface de butée) jusque-là inactifs.

Comme on le voit, que ce soit dans le premier exemple de réalisation ou dans le second, on obtient un boîtier (1, 1') qui se compose notamment
- d'un fond (12) comprenant :
   ∘ une ouverture (122, 123, 122', 123') destinée à être fermée directement ou indirectement par un bouchon (2, 2') ;
   ∘ des moyens d'étanchéité (124, 124') pour assurer l'étanchéité entre le bouchon (2, 2') et le boîtier (1, 1') lorsque le boîtier est muni d'un bouchon ; et
- de moyens de retenue (126, 126') pour retenir, lorsque le récipient est sous pression, un bouchon (2, 2') fermant ladite ouverture, les moyens de retenue se présentant sous une forme initiale inactive (125) et devant, pour remplir leur fonction, être activés (126) après que l'ouverture a été fermée directement ou indirectement par un bouchon. Les moyens de retenue (126, 126') sont distincts du bouchon. En effet, tant que le récipient n'est pas sous pression, il serait possible de repousser le bouchon vers l'intérieur du récipient en surmontant les effets des moyens d'étanchéité (124, 124'). Quand le bouchon (2) est introduit dans le trou (122) et/ou le canal (123), l'ouverture est fermée directement par le bouchon. Par contre, quand le bouchon est intégré dans une unité préassemblée, c'est toute l'unité préassemblée qui ferme l'ouverture : l'ouverture est indirectement fermée par le bouchon avec interposition du canal (123').

De même pour le procédé, on retrouve dans tous les cas les étapes de
a) réalisation d'un fond (12) muni d'une ouverture (122, 123, 122') destinée à être fermée directement ou indirectement par un bouchon (2, 2');
b) réalisation de moyens d'étanchéité (124, 124') pour assurer l'étanchéité entre le bouchon (2, 2') et le boîtier (1, 1') lorsque le boîtier est muni d'un bouchon ;
c) réalisation de moyens de retenue (125, 126') pour retenir, lorsque le récipient est sous pression, un bouchon (2, 2') fermant ladite ouverture,
   les moyens de retenue se présentant sous une forme initiale inactive (125) ;
d) introduction d'un bouchon (2, 2') dans le boîtier pour fermer l'ouverture (122, 123 ; 122') ;
e) puis activation des moyens de retenue (125) pour former une surface de butée (126, 126') empêchant le bouchon de sortir du boîtier.

Dans les exemples présentés ici, les moyens d'étanchéité et les moyens de retenue sont des éléments distincts. Les moyens de retenue pallient le risque de déformation, même minime, du fond sous l'effet de la pression régnant dans le récipient aérosol. Les moyens d'étanchéité n'ont donc pas à remplir en plus la fonction de retenir le bouchon contre l'effet de la pression régnant dans le récipient.

L'invention est destinée en premier lieu à un boîtier en matière plastique. Elle est particulièrement intéressante pour les récipients sous pression multicompartiment, notamment dans le cas des valves à poche, les valves à double poche ou les récipients à piston. On peut également envisager, notamment dans le cas des produits à haute viscosité, de remplir le récipient via l'ouverture avant de placer le bouchon (ou l'unité préassemblée) et d'activer les moyens de retenue et de mettre sous pression, permettant ainsi d'éviter un remplissage via la valve aux passages étroits.

Dans la présente invention, les moyens de retenue du bouchon dans le boîtier se présentent d'abord sous forme inactive et doivent être activés après introduction du bouchon dans le boîtier pour remplir leur fonction :
1^{ère} variante : le bouchon (2) introduit dans le trou (122) ou dans le canal (123) ne résisterait pas à la pression régnant dans le récipient sous pression. Il faut donc, pour activer les moyens de retenue, déformer la zone de déformation (125) ou fixer une rondelle autour du trou (122) ou à l'extrémité inférieure du canal (123) de sorte que la zone déformée (126) ou la rondelle empiète sur le trou et/ou le canal en formant une surface de butée pour le bouchon (2).
2^{ème} variante : le bouchon (2') introduit dans le trou (122') via l'unité préassemblée serait expulsé hors du boîtier sous pression si l'unité préassemblée n'est pas préalablement solidarisée avec le boîtier, et ce, bien que l'unité préassemblée soit déjà munie de la surface de butée (126'). Ce n'est qu'après fixation sur le boîtier (= activation) de l'unité préassemblée que cette surface de butée (126') peut remplir sa fonction.

### Références :

- 1, 1': Boîtier
11 Paroi tubulaire
12 Fond
121, 121' Dôme
122, 122' Trou
123, 123' Canal
124, 124' Nervure d'étanchéité
125 Zone de déformation
126, 126' Zone déformée/surface de butée
127, 127' Centre de la zone déformée/surface de butée
128, 128' Retrait
129' Surface de fixation
13 Col
- 2: Bouchon élastomère (plug)
21, 21' Face frontale du bouchon
- A: Axe de symétrie

## Revendications

1. Boîtier (1, 1') pour récipient sous pression, composé notamment :
- d'un fond (12) comprenant :
∘ une ouverture (122, 123, 122') destinée à être fermée par un bouchon (2, 2') ;
∘ des moyens d'étanchéité (124, 124') pour assurer l'étanchéité entre le bouchon (2, 2') et le boîtier (1, 1') lorsque le boîtier est muni d'un bouchon ; et
- de moyens de retenue (125, 126, 126') pour retenir, lorsque le récipient est sous pression, un bouchon (2, 2') fermant l'ouverture,
les moyens de retenue (125, 126, 126') étant distincts du bouchon (2), et les moyens de retenue (125, 126, 126') se présentant sous une forme initiale inactive (125) et devant, pour remplir leur fonction, être activés (126, 126') après que l'ouverture a été fermée par un bouchon, **caractérisé en ce que** l'activation des moyens de retenue est réalisée soit par déformation des moyens de retenue, soit par soudage.

2. Boîtier (1, 1') selon la revendication 1, **caractérisé en ce que,** avant et après leur activation, les moyens de retenue (125, 126, 126') sont situés sur une face du fond (12) située à l'extérieur du boîtier.

3. Boîtier (1) selon la revendication 1 ou 2, **caractérisé en ce que** l'ouverture comprend un trou (122) de préférence entouré d'un canal (123) s'étendant vers l'intérieur et/ou vers l'extérieur du boîtier (1).

4. Boîtier (1) selon la revendication 3, **caractérisé en ce que** les moyens d'étanchéité sont constitués par une nervure d'étanchéité (124) placée dans le canal (123), notamment à une extrémité du canal située le plus vers l'intérieur du boîtier (1), et/ou placée au niveau du trou (122).

5. Boîtier (1) selon l'une des revendications précédentes, **caractérisé en ce que** les moyens de retenue sont constitués par
- une zone de déformation (125) placée dans le prolongement de l'ouverture, du côté d'une face du fond (12) dirigée vers l'extérieur du boîtier (1), la zone de déformation étant conçue pour être déformée, après introduction d'un bouchon (2) dans l'ouverture, pour former une surface de butée (126) pour le bouchon en vue d'empêcher ce dernier de se déplacer vers l'extérieur du boîtier, ou par
- une rondelie destinée à être fixée au boîtier, de préférence soudée, dans le prolongement de l'ouverture du côté de la face du fond dirigée vers l'extérieur du boîtier après introduction d'un bouchon (2) dans l'ouverture, la rondelle étant conçue pour former après fixation une surface de butée pour le bouchon en vue d'empêcher ce dernier de se déplacer vers l'extérieur du boîtier.

6. Boîtier (1) selon l'une des revendications précédentes, **caractérisé en ce que** l'ouverture (122, 123) est munie d'un bouchon (2) et **en ce que** les moyens de retenue (126) sont activés.

7. Boîtier (1') selon la revendication 1 ou 2, **caractérisé en ce que** l'ouverture comprend un trou (122'), et **en ce que** le boîtier comprend une unité préassemblée séparée du boîtier, et destinée à être introduite dans le trou et à être fixée au boîtier, de préférence soudée, ladite unité préassemblée étant constituée d'un canal (123') muni des moyens d'étanchéité (124') et des moyens de retenue (126'), et d'un bouchon (2') introduit dans le canal et coopérant avec les moyens d'étanchéité et les moyens de retenue (126'), les moyens de retenue comprenant de préférence une surface de fixation (129') pour fixer l'unité préassemblée au boîtier.

8. Boîtier (1') selon la revendication précédente, **caractérisé en ce** les moyens d'étanchéité sont constitués par une nervure d'étanchéité (124') placée dans le canal (123'), notamment à une extrémité du canal située le plus vers l'intérieur du boîtier (1'), et/ou les moyens de retenue sont constitués par une surface de butée (126') empêchant le bouchon de se déplacer vers l'extérieur du boîtier quand l'unité préassemblée est fixée au boîtier, et/ou en ce que les moyens de retenue sont constitués par une rondelle fixée, de préférence soudée, dans le prolongement du canal, du côté d'une face du fond dirigée vers l'extérieur du boîtier, la rondelle étant conçue pour former après fixation une surface de butée pour le bouchon en vue d'empêcher ce dernier de se déplacer vers l'extérieur du boîtier.

9. Boîtier (1') selon l'une des revendications 7 ou 8, **caractérisé en ce que** l'unité préassemblée (123', 124', 126', 129', 2') est introduite dans le trou (122') et est fixée, de préférence soudée, au boîtier (1').

10. Boîtier (1, 1') selon l'une des revendications 6 à 9, **caractérisé en ce que** le bouchon (2, 2') est réalisé dans une matière élastomère, de préférence du nitrile.

11. Boîtier (1, 1') selon l'une des revendications 6 à 9, **caractérisé en ce que** le bouchon est un bouchon de type antiretour.

12. Boîtier (1, 1') selon l'une des revendications précédentes, **caractérisé en ce que** le boîtier, à l'exception du bouchon quand le boîtier est muni d'un bouchon, est constitué par une pièce en matière plastique, de préférence en thermoplastique, notamment en PET, en PEN ou en nylon, ou un mélange de ceux-ci, ladite pièce étant obtenue de préférence par soufflage.

13. Boîtier (1, 1') selon l'une des revendications précédentes, **caractérisé en ce que** l'ouverture (122, 123, 122') et les moyens de retenue (125, 126, 126') sont disposés en un point décentré du fond (12), des moyens d'indexage étant de préférence prévus pour faciliter l'orientation du boîtier (1, 1') lors de la fermeture de l'ouverture par un bouchon (2, 2').

14. Boîtier (1, 1') selon l'une des revendications précédentes, **caractérisé en ce que** le fond (12) présente dans sa partie centrale la forme d'un dôme (121, 121') incurvé de préférence vers l'intérieur du boîtier.

15. Boîtier (1, 1') selon l'une des revendications précédentes, **caractérisé en ce que** l'ouverture (122, 123, 122') et les moyens de retenue (125, 126, 126') sont placés dans un retrait (128, 128') réalisé dans le fond (12), le retrait étant réalisé de préférence dans un dôme (121, 121') formant la partie centrale du fond.

16. Procédé de fabrication d'un boîtier (1, 1') selon l'une des revendications précédentes, comprenant les étapes suivantes :
a) réalisation d'un fond (12) muni d'une ouverture (122, 123, 122') destinée à être fermée par un bouchon (2, 2') ;
b) réalisation de moyens d'étanchéité (124, 124') pour assurer l'étanchéité entre le bouchon (2, 2') et le boîtier (1, 1') lorsque le boîtier est muni d'un bouchon ; et
c) réalisation de moyens de retenue (125, 126, 126') pour retenir, lorsque le récipient est sous pression, un bouchon (2, 2') fermant l'ouverture, et comprenant les étapes consistant
- à fermer l'ouverture par un bouchon (2, 2')
- puis à activer les moyens de retenue (126, 126') qui se présentent sous une forme initiale inactive (125), l'activation des moyens de retenue étant réalisée soit par déformation des moyens de retenue, soit par soudage.

17. Procédé selon la revendication 16, **caractérisé en ce que** lors de l'étape a), un trou (122, 122') est réalisé dans le fond (12), le fond (12) et le trou (122, 122') pouvant être réalisés dans une même étape ou dans deux étapes successives.

18. Procédé selon la revendication 16 ou 17 **caractérisé en ce que** lors de l'étape a) ou lors d'une étape ultérieure, un canal (123) est placé autour du trou (122), lequel canal s'étend vers l'intérieur et/ou vers l'extérieur du boîtier, le trou (122) pouvant être réalisé lors de de la mise en place du canal (123).

19. Procédé selon l'une des revendications 16 à 18, **caractérisé par** les étapes supplémentaires suivantes
d) introduction d'un bouchon (2) dans le boîtier pour fermer l'ouverture (122, 123) ;
e) puis activation des moyens de retenue (125) initialement inactif pour former une surface de butée (126) empêchant le bouchon de sortir du boîtier (1, 1'), l'activation pouvant consister en la déformation d'une zone de déformation (125) ou en la fixation, de préférence la soudure, d'une rondelle.

20. Procédé selon l'une des revendications 16 à 17, **caractérisé en ce qu**'une unité préassemblée, constituée d'un canal (123') muni de moyens d'étanchéité (124') et d'une surface de butée, et d'un bouchon (2') introduit dans le canal et coopérant avec les moyens d'étanchéité, est introduite dans le trou (122') puis fixée sur le boîtier, de préférence par soudage, notamment par friction circulaire, de sorte que l'unité préassemblée avec le bouchon placé dedans ferme le trou (122').

21. Procédé selon l'une des revendications 16 à 20, **caractérisé en ce que** le boîtier est réalisé par soufflage.

## Patentansprüche

1. Gehäuse (1, 1') für einen Druckbehälter, insbesondere bestehend aus:
- einem Boden (12) mit:
∘ einer Öffnung (122, 123, 122'), die dazu bestimmt ist, durch einen Stopfen (2, 2') verschlossen zu werden;
∘ Dichtungsmitteln (124, 124'), um die Dichtigkeit zwischen dem Stopfen (2, 2') und dem Gehäuse (1, 1') zu gewährleisten, wenn das Gehäuse mit einem Stopfen versehen ist; und
- Haltemittel (125, 126, 126'), um einen die Öffnung verschließenden Stopfen (2, 2') zu halten, wenn der Behälter unter Druck steht,
wobei die Haltemittel (125, 126, 126') von dem Stopfen (2) getrennt sind und in einer ursprünglich inaktiven Form (125) vorliegen und, um ihre Funktion zu erfüllen, aktiviert werden müssen (126, 126'), nachdem die Öffnung durch einen Stopfen verschlossen wurde,
**dadurch gekennzeichnet, dass** die Aktivierung der Haltemittel entweder durch Verformung der Haltemittel oder durch Schweißen erreicht wird.

2. Gehäuse (1, 1') nach Anspruch 1, **dadurch gekennzeichnet, dass** sich die Haltemittel (125, 126, 126') vor und nach ihrer Aktivierung auf einer Seite des Bodens (12) befinden, die sich außerhalb des Gehäuses befindet.

3. Gehäuse (1) nach Anspruch 1 oder 2, **dadurch gekennzeichnet, dass** die Öffnung ein Loch (122) umfasst, das vorzugsweise von einem Kanal (123) umgeben ist, der sich zum Inneren und/oder Äußeren des Gehäuses (1) hin erstreckt.

4. Gehäuse (1) nach Anspruch 3, **dadurch gekennzeichnet, dass** die Dichtungsmittel aus einer Dichtrippe (124) bestehen, die in dem Kanal (123), insbesondere an einem am weitesten im Inneren des Gehäuses (1) liegenden Ende des Kanals angeordnet ist, und/oder an dem Loch (122) angeordnet ist.

5. Gehäuse (1) nach einem der vorhergehenden Ansprüche, **dadurch gekennzeichnet, dass** die Haltemittel gebildet werden durch
- einen Verformungsbereich (125), der in der Verlängerung der Öffnung auf der Seite einer zur Außenseite des Gehäuses (1) hin gerichteten Seite des Bodens (12) liegt, wobei der Verformungsbereich dazu ausgelegt ist, nach dem Einführen eines Stopfens (2) in die Öffnung verformt zu werden, um eine Anschlagfläche (126) für den Stopfen zu bilden, um diesen daran zu hindern, sich zur Außenseite des Gehäuses hin zu bewegen, oder durch
- eine Unterlegscheibe, die dazu bestimmt ist, am Gehäuse in der Verlängerung der Öffnung auf der Seite der zur Außenseite des Gehäuses gerichteten Seite der Bodenfläche befestigt, vorzugsweise angeschweißt, zu werden, nachdem ein Stopfen (2) in die Öffnung eingeführt wurde, wobei die Unterlegscheibe so gestaltet ist, dass sie nach der Befestigung eine Anschlagfläche für den Stopfen bildet, um diesen daran zu hindern, sich zur Außenseite des Gehäuses hin zu bewegen.

6. Gehäuse (1) nach einem der vorhergehenden Ansprüche, **dadurch gekennzeichnet, dass** die Öffnung (122, 123) mit einem Stopfen (2) versehen ist und dass die Haltemittel (126) aktiviert sind.

7. Gehäuse (1') nach Anspruch 1 oder 2, **dadurch gekennzeichnet, dass** die Öffnung ein Loch (122') umfasst, und dass das Gehäuse eine vormontierte Einheit umfasst, die vom Gehäuse getrennt ist und dazu bestimmt ist, in das Loch eingeführt und am Gehäuse befestigt, vorzugsweise geschweißt, zu werden, wobei die vormontierte Einheit aus einem Kanal (123') besteht, der mit den Dichtungsmitteln (124') und den Haltemitteln (126') versehen ist, und aus einem Stopfen (2'), der in den Kanal eingeführt ist und mit den Dichtungsmitteln und den Haltemitteln (126') zusammenwirkt, wobei die Haltemittel vorzugsweise eine Befestigungsfläche (129') zum Befestigen der vormontierten Einheit am Gehäuse umfassen.

8. Gehäuse (1') nach dem vorhergehenden Anspruch, **dadurch gekennzeichnet, dass** die Dichtungsmittel aus einer Dichtrippe (124') bestehen, die in dem Kanal (123'), insbesondere an einem am weitesten im Inneren des Gehäuses (1) liegenden Ende des Kanals angeordnet ist, und/oder die Haltemittel aus einer Anschlagfläche (126') bestehen, die verhindert, dass sich der Stopfen nach außen aus dem Gehäuse bewegt, wenn die vormontierte Einheit am Gehäuse befestigt ist, und/oder dass die Haltemittel aus einer Unterlegscheibe bestehen, die in der Verlängerung des Kanals auf der Seite einer nach außen gerichteten Fläche des Bodens des Gehäuses befestigt, vorzugsweise geschweißt, ist, wobei die Unterlegscheibe so gestaltet ist, dass sie nach der Befestigung eine Anschlagfläche für den Stopfen bildet, um zu verhindern, dass sich der Stopfen zur Außenseite des Gehäuses hin bewegt.

9. Gehäuse (1') nach einem der Ansprüche 7 oder 8, **dadurch gekennzeichnet, dass** die vormontierte Einheit (123', 124', 126', 129', 2') in das Loch (122') eingeführt und am Gehäuse (1') befestigt, vorzugsweise angeschweißt, ist.

10. Gehäuse (1, 1') nach einem der Ansprüche 6 bis 9, **dadurch gekennzeichnet, dass** der Stopfen (2, 2') aus einem elastomeren Material, vorzugsweise Nitril, hergestellt ist.

11. Gehäuse (1, 1') nach einem der Ansprüche 6 bis 9, **dadurch gekennzeichnet, dass** der Stopfen ein Stopfen vom Typ Rückschlagsperre ist.

12. Gehäuse (1, 1') nach einem der vorhergehenden Ansprüche, **dadurch gekennzeichnet, dass** das Gehäuse, mit Ausnahme des Stopfens, wenn das Gehäuse mit einem Stopfen versehen ist, aus einem Teil aus Kunststoff, vorzugsweise aus thermoplastischem Kunststoff, insbesondere aus PET, PEN oder Nylon, oder einer Mischung davon besteht, wobei das Teil vorzugsweise durch Blasformen erhalten wird.

13. Gehäuse (1, 1') nach einem der vorhergehenden Ansprüche, **dadurch gekennzeichnet, dass** die Öffnung (122, 123, 122') und die Haltemittel (125, 126, 126') an einem dezentrierten Punkt des Bodens (12) angeordnet sind, wobei vorzugsweise Indexierungsmittel vorgesehen sind, um die Ausrichtung des Gehäuses (1, 1') beim Verschließen der Öffnung durch einen Stopfen (2, 2') zu erleichtern.

14. Gehäuse (1, 1') nach einem der vorhergehenden Ansprüche, **dadurch gekennzeichnet, dass** der Boden (12) in seinem mittleren Teil die Form einer Kuppel (121, 121') aufweist, die vorzugsweise zum Inneren des Gehäuses hin gekrümmt ist.

15. Gehäuse (1, 1') nach einem der vorhergehenden Ansprüche, **dadurch gekennzeichnet, dass** die Öffnung (122, 123, 122') und die Haltemittel (125, 126, 126') in einer im Boden (12) ausgebildeten Einbuchtung (128, 128') angeordnet sind, wobei die Einbuchtung vorzugsweise als Kuppel (121, 121') ausgebildet ist, die den zentralen Teil des Bodens bildet.

16. Verfahren zur Herstellung eines Gehäuses (1, 1') nach einem der vorhergehenden Ansprüche, umfassend die folgenden Schritte:
a) Herstellung eines Bodens (12), der mit einer Öffnung (122, 123, 122') versehen ist, die dazu bestimmt ist, durch einen Stopfen (2, 2') verschlossen zu werden;
b) Herstellung von Dichtungsmitteln (124, 124'), um die Dichtigkeit zwischen dem Stopfen (2, 2') und dem Gehäuse (1, 1') zu gewährleisten, wenn das Gehäuse mit einem Stopfen versehen ist; und
c) Herstellung von Haltemitteln (125, 126, 126'), um, wenn der Behälter unter Druck steht, einen die Öffnung verschließenden Stopfen (2, 2') zu halten,
und umfassend die Schritte
- Schließung der Öffnung durch einen Stopfen (2, 2')
- und dann Aktivierung der Haltemittel (126, 126'), die in einer anfänglich inaktiven Form (125) vorliegen, wobei die Aktivierung der Haltemittel entweder durch Verformung der Haltemittel oder durch Schweißen erfolgt.

17. Verfahren nach Anspruch 16, **dadurch gekennzeichnet, dass** in Schritt a) ein Loch (122, 122') in den Boden (12) eingebracht wird, wobei der Boden (12) und das Loch (122, 122') in einem einzigen Schritt oder in zwei aufeinanderfolgenden Schritten hergestellt werden können.

18. Verfahren nach Anspruch 16 oder 17, **dadurch gekennzeichnet, dass** in Schritt a) oder in einem nachfolgenden Schritt ein Kanal (123) um das Loch (122) herum angeordnet wird, wobei sich der Kanal in das Gehäuse hinein und/oder aus dem Gehäuse heraus erstreckt, wobei das Loch (122) beim Anordnen des Kanals (123) hergestellt werden kann.

19. Verfahren nach einem der Ansprüche 16 bis 18, **gekennzeichnet durch** die folgenden weiteren Schritte
d) Einführung eines Stopfens (2) in das Gehäuse, um die Öffnung (122, 123) zu verschließen;
e) dann Aktivierung der ursprünglich inaktiven Haltemittel (125), um eine Anschlagfläche (126) zu bilden, die den Stopfen daran hindert, aus dem Gehäuse (1, 1') auszutreten, wobei die Aktivierung in der Verformung eines Verformungsbereichs (125) oder in der Befestigung, vorzugsweise dem Anschweißen, einer Unterlegscheibe bestehen kann.

20. Verfahren nach einem der Ansprüche 16 bis 17, **dadurch gekennzeichnet, dass** eine vormontierte Einheit, bestehend aus einem Kanal (123') mit Dichtungsmitteln (124') und einer Anschlagfläche und einem Stopfen (2'), der in den Kanal eingeführt wird und mit den Dichtungsmitteln zusammenwirkt, in das Loch (122') eingeführt und dann an dem Gehäuse befestigt wird, vorzugsweise durch Schweißen, insbesondere durch Rotationsreibschweißen, so dass die vormontierte Einheit mit dem darin angeordneten Stopfen das Loch (122') verschließt.

21. Verfahren nach einem der Ansprüche 16 bis 20, **dadurch gekennzeichnet, dass** das Gehäuse durch Blasformen hergestellt wird.

## Claims

1. Housing (1, 1') for a pressurized container, comprising in particular:
- a bottom (12) comprising:
∘ an opening (122, 123, 122') intended to be closed by a stopper (2, 2');
∘ sealing means (124, 124') to ensure sealing between the stopper (2, 2') and the housing (1, 1') when the housing is provided with a stopper; and
- retaining means (125, 126, 126') to retain, when the container is pressurized, a stopper (2, 2') closing the opening,
wherein the retaining means (125, 126, 126') are distinct from the stopper (2) and are in an inactive initial form (125) and must, in order to fulfill their function, be activated (126, 126') after the opening has been closed with a stopper, **characterized in that** the activation of the retaining means is carried out either by deformation of the retaining means or by welding.

2. Housing (1, 1') according to claim 1, **characterized in that,** before and after their activation, the retaining means (125, 126, 126') are located on a face of the bottom (12) located outside the housing.

3. Housing (1) according to claim 1 or 2, **characterized in that** the opening comprises a hole (122) preferably surrounded by a channel (123) extending toward the inside and/or toward the outside of the housing (1).

4. Housing (1) according to claim 3, **characterized in that** the sealing means are constituted by a sealing rib (124) placed in the channel (123), in particular at an end of the channel located the most toward the inside of the housing (1), and/or placed at the hole (122).

5. Housing (1) according to one of the preceding claims, **characterized in that** the retaining means are constituted by
- a deformation zone (125) placed in the extension of the opening, on the side of a face of the bottom (12) oriented toward the outside of the housing (1), the deformation zone being designed to be deformed, after introduction of a stopper (2) in the opening, to form an abutment surface (126) for the stopper to prevent the latter from moving toward the outside of the housing, or by
- a washer intended to be fixed, preferably welded, to the housing in the extension of the opening on the side of the face of the bottom oriented toward the outside of the housing after introduction of a stopper (2) into the opening, the washer being designed to form, after being fixed, an abutment surface for the stopper in order to prevent the latter from moving toward the outside of the housing.

6. Housing (1) according to one of the preceding claims, **characterized in that** the opening (122, 123) is provided with a stopper (2) and **in that** the retaining means (126) are activated.

7. Housing (1') according to claim 1 or 2, **characterized in that** the opening comprises a hole (122'), and **in that** the housing comprises a preassembled unit separate from the housing, and intended to be introduced into the hole and to be fixed, preferably welded, to the housing, said preassembled unit being constituted by a channel (123') provided with sealing means (124') and retaining means (126'), and a stopper (2') introduced into the channel and cooperating with the sealing means and the retaining means (126'), the retaining means preferably comprising a fixing surface (129') for fixing the preassembled unit to the housing.

8. Housing (1') according to the preceding claim, **characterized in that** the sealing means are constituted by a sealing rib (124') placed in the channel (123'), in particular at an end of the channel located the most toward the inside of the housing (1'), and/or the retaining means are constituted by an abutment surface (126') preventing the stopper from moving toward the outside of the housing when the preassembled unit is fixed to the housing, and/or in that the retaining means are constituted by a washer fixed, preferably welded, in the extension of the channel, on the side of a face of the bottom oriented toward the outside of the housing, the washer being designed to form, after being fixed, an abutment surface for the stopper in order to prevent the latter from moving toward the outside of the housing.

9. Housing (1') according to one of claims 7 or 8, **characterized in that** the preassembled unit (123', 124', 126', 129', 2') is introduced into the hole (122') and is fixed, preferably welded, to the housing (1').

10. Housing (1, 1') according to one of claims 6 to 9, **characterized in that** the stopper (2, 2') is made in an elastomeric material, preferably nitrile.

11. Housing (1, 1') according to one of claims 6 to 9, **characterized in that** the stopper is a stopper of the non-return type.

12. Housing (1, 1') according to one of the preceding claims, **characterized in that** the housing, with the exception of the stopper if the housing is fitted with a stopper, is constituted by a part in plastic material, preferably thermoplastic, in particular PET, PEN or nylon, or a mixture thereof, said part preferably being obtained by blow molding.

13. Housing (1, 1') according to one of the preceding claims, **characterized in that** the opening (122, 123, 122') and the retaining means (125, 126, 126') are arranged at an offcenter point of the bottom (12), indexing means preferably being provided to facilitate the orientation of the housing (1, 1') when closing the opening with a stopper (2, 2').

14. Housing (1, 1') according to one of the preceding claims, **characterized in that** the bottom (12) has, in its central portion, the shape of a dome (121, 121') curved preferably toward the inside of the housing.

15. Housing (1, 1') according to one of the preceding claims, **characterized in that** the opening (122, 123, 122') and the retaining means (125, 126, 126') are placed in a recess (128, 128') made in the bottom (12), the recess preferably being made in a dome (121, 121') forming the central portion of the bottom.

16. Method of manufacturing a housing (1, 1') according to one of the preceding claims, comprising the following steps:
a) making a bottom (12) provided with an opening (122, 123, 122') intended to be closed by a stopper (2, 2');
b) making sealing means (124, 124') to ensure sealing between the stopper (2, 2') and the housing (1, 1') when the housing is provided with a stopper; and
c) making retaining means (125, 126, 126') to retain, when the container is pressurized, a stopper (2, 2') closing the opening,
and including the steps consisting of
- closing the opening by a stopper (2, 2'),
- then activating the retaining means (126, 126'), which are in an inactive initial form (125), wherein the activation of the retaining means is carried out either by deformation of the retaining means or by welding.

17. Method according to claim 16, **characterized in that** during step a), a hole (122, 122') is made in the bottom (12), wherein the bottom (12) and the hole (122, 122') can be made in the same step or in two successive steps.

18. Method according to claim 16 or 17, **characterized in that** during step a) or in a subsequent step, a channel (123) is placed around the hole (122), which channel extends toward the inside and/or the outside of the housing, wherein the hole (122) can be made during the installation of the channel (123).

19. Method according to one of claims 16 to 18, **characterized by** the following additional steps:
d) introducing a stopper (2) into the housing to close the opening (122, 123);
e) then activating the initially inactive retaining means (125) to form an abutment surface (126) preventing the stopper from coming out of the housing (1, 1'), wherein the activation can consist in deforming a deformation zone (125) or in fixing, preferably welding, a washer.

20. Method according to one of claims 16 to 17, **characterized in that** a preassembled unit, constituted by a channel (123') provided with sealing means (124') and an abutment surface, and a stopper (2) introduced into the channel and cooperating with the sealing means, is introduced into the hole (122'), then fixed to the housing, preferably by welding, in particular by spin welding, so that the preassembled unit with the stopper placed therein closes the hole (122').

21. Method according to one of claims 16 to 20, **characterized in that** the housing is made by blow molding.
